# EUROPÄISCHE PATENTSCHRIFT

(11) **EP 1 645 820 B1**
(45) Veröffentlichungstag und Bekanntmachung des Hinweises auf die Patenterteilung: **04.11.2009**
(21) Anmeldenummer: 05021591.2
(22) Anmeldetag: 04.10.2005
(51) Int. Cl.: F25B 49/04

(54) **Verfahren zum Betrieb einer periodisch arbeitenden Vakuum-Sorptionsvorrichtung**
Method of control for a periodically operating vacuum sorption device
Procédé de contrôle d'une installation de sorption à vide fonctionnant en intermittence

(30) Priorität: 08.10.2004 DE 102004049416
(43) Veröffentlichungstag der Anmeldung: 12.04.2006
(73) Patentinhaber: Viessmann Werke GmbH & Co KG, 35107 Allendorf (DE)
(72) Erfinder: Stricker, Marc Dr., 35037 Marburg (DE)
(74) Vertreter: Wolf, Günter

(56) Entgegenhaltungen:
- DE-A1- 10 217 443
- DE-A1- 19 834 696
- DE-C- 522 393
- DE-C- 735 362
- GB-A- 416 747
- GB-A- 520 977
- US-A- 1 729 081
- US-A- 1 897 980
- US-A- 1 943 616
- US-A- 2 340 887
- US-A- 2 438 105
- US-A- 5 335 510

## Beschreibung

Die Erfindung betrifft ein Verfahren zum Betrieb einer periodisch arbeitenden Vakuum-Sorptionsvorrichtung gemäß dem Oberbegriff des Patentanspruchs 1.

Nach der DE 103 10 748 B3 ist ein Verfahren zum Betrieb einer periodisch arbeitenden vakuum-Sorptionsvorrichtung bekannt, bei dem einem Sorptionsmittel in einer Desorptionsphase über einen von einem Wärmeträgermedium durchströmten, ersten Wärmetauscher mindestens zeitweise Wärme zugeführt wird und bei dem das Sorptionsmittel in einer Adsorptionsphase über den ersten Wärmetauscher Wärme an einen vom Wärmeträgermedium durchströmten Wärmeträgerkreislauf abgibt, wobei die Wärme in der Desorptionsphase von einer Wärmequelle (Gasbrenner) erzeugt wird, die über einen zweiten Wärmetauscher mit dem vom Wärmeträgermedium durchströmten Wärmeträgerkreislauf verbunden ist.

Nach der DE-198 34 696 und US-2 438 105 sind auch weitere Verfahren zum Betrieb Vakuum-Sorptionsvorrichtungen bekannt.

Üblicher Weise werden diese Vakuum-Sorptionsvorrichtungen als Adsorptionswärmepumpen als Bestandteil einer Gesamtanlage zur Wärmeerzeugung zur Beheizung von Gebäuden betrieben. Wie erwähnt, dient dabei als Wärmequelle regelmäßig ein Gasbrenner, der modulierend arbeitet, um den tatsächlich angeforderten Wärmebedarf möglichst genau zu decken.

Hierdurch ergeben sich aufgrund der periodisch arbeitenden Vakuum-Sorptionsvorrichtung und der damit verbundenen Maßgabe, die Leistung an die Betriebszustände der Gesamtanlage anpassen zu müssen, relativ häufige Brennerschaltungen. Dies führt zu verschleiß und setzt außerdem regelmäßig, wie erwähnt, einen modulierenden Gasbrenner voraus.

Der Erfindung liegt die Aufgabe zugrunde, das Verfahren zum Betrieb einer Vakuum-Sorptionsvorrichtung der eingangs genannten Art dahingehend weiter zu entwickeln, dass insbesondere die Anzahl der Brennerschaltungen reduziert wird und dass sich somit eine vereinfachte Regelung der Gesamtanlage ergibt.

Diese Aufgabe ist mit einem Verfahrn zum Betrieb einer Vakuum-Sorptionsvorrichtung der eingangs genannten Art durch die im Kennzeichen des Patentanspruchs 1 aufgeführten Merkmale gelöst.

Nach der Erfindung ist also vorgesehen, dass die Wärmequelle während der periodisch wiederkehrenden Desorptionsphase maximal in zwei Leistungsstufen betrieben wird. Der Begriff "Leistungsstufe" bedeutet dabei, dass der Brenner tatsächlich Wärmeleistung erbringt, d. h. der Zustand "Brenner aus" wird nicht als "Leistungsstufe" verstanden, weil der Brenner in diesem Fall keine Leistung abgibt.

Mit anderen Worten ausgedrückt, ist vorgesehen, die Desorptionsphase einer einmodularen Adsorptionswärmepumpe unabhängig vom tatsächlichen Wärmebedarf des verbrauchers immer identisch ablaufen zu lassen. Der Hintergrund hierzu ist, dass die in der Desorptionsphase anfallende Nutzwärme einer solchen Anlage ein Vielfaches kleiner als die in der anschließenden Adsorptionsphase ist. Das Ziel besteht also darin, die Desorptionsphase immer gleich zu durchlaufen und möglichst schnell zu beenden. Erfindungsgemäß ist vorgesehen, beim Start der Desorptionsphase den Brenner auf eine konstante Last (z. B. Volllast) zu schalten. Beim Erreichen einer vorbestimmten Temperatur unterhalb (etwa 5°C bis 10°C) der maximalen Desorptionstemperatur wird der Brenner auf eine zweite, kleinere Last (z. B. Kleinlast) geschaltet. In diesem Betriebszustand verharrt der Brenner bis zum Erreichen der maximalen Desorptionstemperatur. Ist diese dann erreicht (z. B. gemessen am Brenneraustritt), wird der Brenner abgeschaltet. Die Anlage verbleibt in diesem Zustand wahlweise für eine festgelegte Zeit oder bis zum Erreichen eines vorgegebenen Temperaturgradienten über den brenner- oder sorberseitigen Wärmetauscher. Sollte bei dieser Verfahrensweise die Vorlauftemperatur im Verbraucherkreis über den gewünschten Sollwert hinaus ansteigen, so ist dies auf Grund der Kürze der Desorptionsphase (typischer Weise 200s bis 400s) im Interesse des gesamten Wärmepumpenprozesses zu tolerieren. Das Heiznetz dient in dieser Phase als Puffer.

Durch diese erfindungsgemäßen Maßgaben wird die Häufigkeit der Brennerschaltungen stark reduziert; der Einsatz eines modulierenden Brenners ist nicht mehr zwingend erforderlich. In der anschließenden Adsorptionsphase erfolgt die Leistungsabgabe an den Verbraucherkreis dadurch, dass das auf hohem Temperaturniveau befindliche Wärmeträgermedium des Sorbers beispielsweise über ein Mischventil mit dem aus dem Rücklauf des Verbraucherkreis kommenden Wärmeträgermedium zur entsprechend gewünschten Vorlauftemperatur des Verbraucherkreislaufs zusammengemischt wird.

Aufgrund der beschriebenen Betriebsweise können zur Umsetzung des erfindungsgemäßen Verfahrens auch Wärmequellen eingesetzt werden, die nicht über eine (oder gar keine) Modulationsbreite der zum heutigen Stand der Technik zählenden Gasbrenner verfügen. Damit ist erfindungsgemäß insbesondere der Einsatz von Ölbrennern vorgesehen.

Weitere vorteilhafte Weiterbildungen des erfindungsgemäßen Verfahrens ergeben sich aus den abhängigen Ansprüchen.

Das erfindungsgemäße Verfahren einschließlich seiner vorteilhaften Weiterbildungen wird nachfolgend anhand der zeichnerischen Darstellung eines bevorzugten Ausführungsbeispiels genauer erläutert.

Es zeigt
- Figur 1: schematisch ein Schaltbild eines Teils der Vakuum-Sorptionsvorrichtung; und
- Figur 2: ein Diagramm des erfindungsgemäßen Verfahrens.

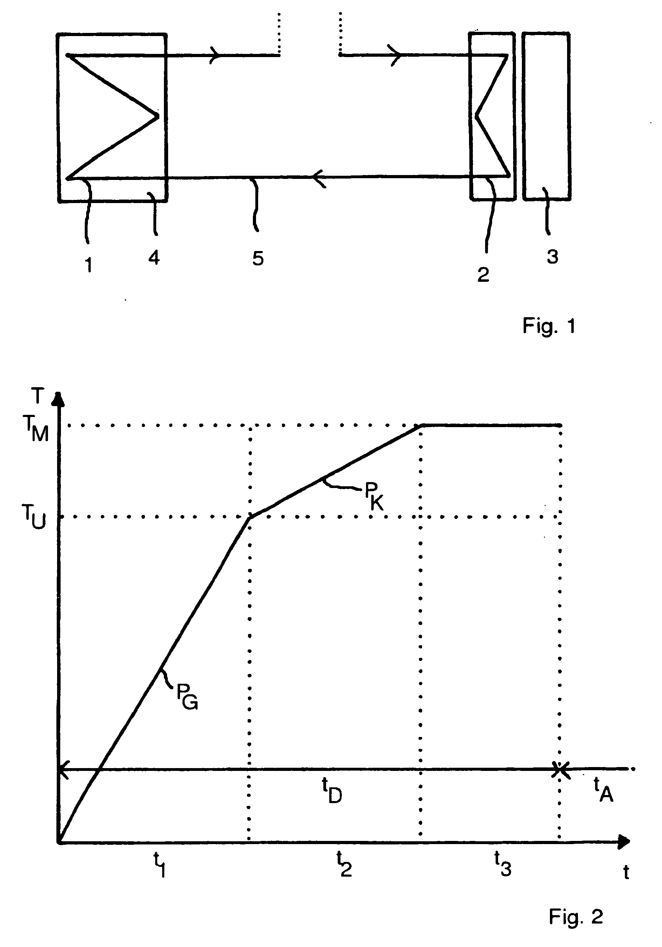

In Figur 1 ist zunächst eine Vakuum-Sorptionsvorrichtung zur Durchführung des erfindungsgemäßen Verfahrens dargestellt. Diese umfasst einen aus einem Sorptionsmittel, vorzugsweise Zeolith, und einem ersten Wärmetauscher 1 bestehenden, periodisch ein Kältemittel ad- oder desorbierenden Sorber 4, eine Wärmequelle 3 mit einem zweiten Wärmetauscher 2 und einen mit einem Wärmeträgermedium befüllten, die Wärmetauscher 1, 2 miteinander verbindenden Wärmeträgerkreislauf 5. Die in Figur 1 gepunkteten Linien deuten an, dass der Wärmeträgerkreislauf 5 weitere Komponenten enthält und wahlweise direkt (DE 102 17 443 B4) oder indirekt (DE 103 10 748 B3) mit einem Heizkreislauf eines Gebäudes verbunden ist.

Zum Betrieb einer periodisch arbeitenden Vakuum-Sorptionsvorrichtung ist ein Verfahren bekannt, bei dem einem Sorptionsmittel in einer Desorptionsphase t_{D} über einen von einem Wärmeträgermedium durchströmten, ersten Wärmetauscher 1 mindestens zeitweise Wärme zugeführt wird und bei dem das Sorptionsmittel in einer Adsorptionsphase t_{A} über den ersten Wärmetauscher 1 Wärme an einen vom Wärmeträgermedium durchströmten Wärmeträgerkreislauf 5 abgibt. Dabei wird die Wärme in der Desorptionsphase von einer Wärmequelle 3 erzeugt, die über einen zweiten Wärmetauscher 2 mit dem vom Wärmeträgermedium durchströmten Wärmeträgerkreislauf 5 verbunden ist.

Erfindungsgemäß ist nun wesentlich, und dies geht insbesondere aus Figur 2 hervor, dass die Wärmequelle 3 während der periodisch wiederkehrenden Desorptionsphase t_{D} maximal in zwei Leistungsstufen P_{G}, P_{R} betrieben wird.

Dabei hat es sich als besonders vorteilhaft erwiesen, wenn die Desorptionsphase t_{D}, wie dargestellt, in ein erstes t₁, zweites t₂ und drittes t₃ Zeitintervall eingeteilt ist, wobei die Wärmequelle 3 im ersten t₁ unter Großlast P_{G}, vorzugsweise Volllast, im zweiten t₂ unter Kleinlast P_{K} bis zum Erreichen einer maximalen Desorptionstemperatur T_{M} und im dritten t₃ Zeitintervall nicht betrieben wird.

Dabei dauert das erste Zeitintervall t₁ vorzugsweise an, bis eine bestimmte Umschalttemperatur T_{U} unterhalb der maximalen Desorptionstemperatur T_{M} erreicht ist. Diese Umschalttemperatur Tu liegt vorzugsweise zwischen 5°C bis 10°C unterhalb der maximalen Desorptionstemperatur T_{M}.

Das dritte Zeitintervall t₃ bei abgeschalteter Wärmequelle 3 dauert wahlweise eine festgelegte Zeitdauer oder bis zum Erreichen eines vordefinierten Temperaturgradienten wahlweise über den wärmequelleseitigen oder den sorberseitigen Wärmetauscher 1, 2 an. Diese Temperaturgradienten werden mit entsprechenden mit der Regelung der Anlage verbundenen Temperatursensoren am jeweiligen Wärmetauscher 1, 2 ermittelt.

Gegenständlich ergibt sich aus der erfindungsgemäßen Verfahrensweise insbesondere der Vorteil, dass die Wärmequelle 3 als vorzugsweise zweistufiger Ölbrenner ausgebildet sein kann.

### Bezugszeichenliste

- 1: Wärmetauscher
- 2: Wärmetauscher
- 3: Wärmequelle
- 4: Sorber
- 5: Wärmeträgerkreislauf

- P_{G}: Leistung Brenner klein
- Pₓ: Leistung Brenner groß
- T_{M}: maximale Desorptionstemperatur
- T_{U}: Umschalttemperatur
- t₁: erstes Zeitintervall
- t₂: zweites Zeitintervall
- t₃: drittes Zeitintervall
- t_{A}: Zeitdauer Adsorptionsphase (nur angedeutet dargestellt)
- t_{D}: Zeitdauer Desorptionsphase

## Patentansprüche

1. Verfahren zum Betrieb einer periodisch arbeitenden Vakuum-Sorptionsvorrichtung,
bei dem einem Sorptionsmittel in einer Desorptionsphase (t_{D}) über einen von einem Wärmeträgermedium durchströmten, ersten Wärmetauscher (1) mindestens zeitweise Wärme zugeführt wird und
bei dem das Sorptionsmittel in einer Adsorptionsphase (t_{A}) über den ersten Wärmetauscher (1) Wärme an einen vom Wärme - trägermedium durchströmten Wärmeträgerkreislauf (5) abgibt, wobei die Wärme in der Desorptionaphase (t_{D}) von einer Wärmequelle (3) erzeugt wird, die über einen zweiten Wärmetauscher (2) mit dem vom Wärmeträgermedium durchströmten Wärmeträgerkreislauf (5) verbunden ist,
**dadurch gekennzeichnet,**
**dass** die Wärmequelle (3) während der periodisch wiederkehrenden Desorptionsphase (t_{D}) maximal in zwei Leistungsstufen betrieben wird,
**dass** die Desorptionsphase (t_{D}) in ein erstes (t₁), zweites (t₂) und drittes (t₃) Zeitintervall eingeteilt ist, wobei die Wärmequelle (3) im ersten (t₁) unter GroLilaet (P_{G}), vorzugsweise Volllast, im zweiten (t₂) unter Kleinlast (P_{K}) bis zum Erreichen einer maximalen Desorptionstemperatur (T_{M}) und im dritten (t₃) Zeitintervall nicht betrieben wird,
**dass** das erste Zeitintervall (t₁) andauert, bis eine bestimmte Umschalttemperatur (T_{U}) unterhalb einer maximalen Desorptionstemperatur (T_{M}) erreicht ist.

2. Verfahren nach Anspruch 1,
**dadurch gekennzeichnet,**
**dass** die Umschalttemperatur (T_{U}) zwischen 5°C bis 10°C unterhalb der maximalen Desorptionstemperatur (T_{M}) liegt.

3. Verfahren nach Anspruch 1 oder 2,
**dadurch gekennzeichnet,**
**dass** das dritte Zeitintervall (t₃) bei abgeschalteter Wärmequelle (3) eine festgelegte Zeitdauer andauert.

4. Verfahren nach einem der Anspräche 1 bis 3,
**dadurch gekennzeichnet,**
**dass** das dritte Zeitintervall (t₃) bei abgeschalteter Wärmequelle (3) bis zum Erreichen eines vordefinierten Temperaturgradienten wahlweise über den wärmequelleseitigen oder den sorberseitigen Wärmetauscher (1, 2) andauert.

5. Vakuum-Sorptionsvorrichtung zur Durchführung des Verfahrens nach Anspruch 1, umfassend einen aus einem Sorptionsmittel und einem ersten Wärmetauscher (1) bestehenden, periodisch ein Kältemittel ad- oder desorbierenden Sorber (4), eine Wärmequelle (3) mit einem zweiten Wärmetauscher (2) und einen mit einem Wärmeträgermedium be=üllten, die Wärmetauscher (1, 2) miteinander verbindenden Wärmeträgerkreislauf (5),
**dadurch gekennzeichnet,**
**dass** die Wärmequelle (3) als Ölbrenner ausgebildet ist.

6. Vakuum Sorptionsvorrichtung nach Anspruch 5,
**dadurch gekennzeichnet,**
**dass** der Ölbrenner als zweistufiger Ölbrenner ausgebildet ist.

7. Vakuum-Sorptionsvorrichtung nach Anspruch 5 oder 6,
**dadurch gekennzeichnet,**
**dass** als Sorptionsmittel Zeolith verwendet wird.

## Claims

1. A method for operating a periodically working vacuum sorption device
wherein heat is at least intermittently supplied to a sorption agent in a desorption phase (t_{D}) via a first heat exchanger (1) through which a heat transfer medium flows, and
wherein the sorption agent releases heat in an adsorption phase (t_{A}) via the first heat exchanger (1) to a heat transfer medium circuit (5) through which the heat transfer medium flows, the heat in the desorption phase (t_{D}) being produced by a heat source (3) connected to the heat transfer medium circuit (5), through which the heat transfer medium flows, via a second heat exchanger (2),
**characterized in that**
the heat source (3) is operated in a maximum of two output stages during the periodically recurring desorption phase (t_{D});
the desorption phase (t_{D}) is divided into a first time interval (t₁), second time interval (t₂) and third time interval (t₃), the heat source (3) being operated in the first time interval (t₁) under high load (P_{G}), preferably full load, in the second time interval (t₂) under low load (P_{K}) until a maximum desorption temperature (T_{M}) is reached, and not operated in the third time interval (t₃);
the first time interval (t₁) lasts until a certain switching temperature (T_{U}) below a maximum desorption temperature (T_{M}) is reached.

2. A method according to claim 1,
**characterized in that**
the switching temperature (Tᵤ) is between 5°C to 10°C below the maximum desorption temperature (T_{M}).

3. A method according to claim 1 or claim 2,
**characterized in that**
the third time interval (t₃) with heat source (3) switched off lasts for a specified time period.

4. A method according to any of claims 1 to 3,
**characterized in that**
the third time interval (t₃) with heat source (3) switched off lasts until a pre-defined temperature gradient optionally across the heat exchanger (1, 2) on the heat source side or the sorber side is reached.

5. A vacuum sorption device for implementing the method according to claim 1 comprising a sorber (4), which consists of a sorption agent and a first heat exchanger (1) and periodically ad- or desorbs a refrigerant; a heat source (3) with a second heat exchanger (2); and a heat transfer medium circuit (5), which is filled with a heat transfer agent and interconnects the heat exchangers (1, 2),
**characterized in that**
the heat source (3) is designed as oil burner.

6. A vacuum sorption device according to claim 5,
**characterized in that**
the oil burner is designed as a two-stage oil burner.

7. A vacuum sorption device according to claim 5 or claim 6,
**characterized in that**
zeolite is used as sorption agent.

## Revendications

1. Procédé de fonctionnement d'un dispositif de sorption sous vide fonctionnant périodiquement,
dans lequel au moins ponctuellement de la chaleur est introduite dans un moyen de sorption pendant une phase de désorption (t_{D}) par l'intermédiaire d'un premier échangeur de chaleur (1) traversé par un milieu caloporteur,
dans lequel le moyen de sorption délivre pendant une phase d'absorption (t_{A}) par l'intermédiaire du premier échangeur de chaleur (1) de la chaleur à un circuit caloporteur (5) traversé par le milieu caloporteur, dans lequel la chaleur est produite pendant la phase de désorption (t_{D}) à partir d'une source de chaleur (3), qui est reliée par l'intermédiaire d'un deuxième échangeur de chaleur (2) au circuit caloporteur (5) traversé par le milieu caloporteur,
**caractérisé en ce que**
la source de chaleur (3) est exploitée pendant la phase de désorption (t_{D}) se répétant périodiquement au maximum en deux étages de puissance,
la phase de désorption (t_{D}) est divisée en un premier (t1), un deuxième (t2) et un troisième (t3) intervalle de temps, dans lequel la source de chaleur (3) est exploitée dans le premier intervalle de temps (t1) sous une charge élevée (P_{G}), de préférence une charge complète, dans le deuxième intervalle de temps (t2) sous une faible charge (P_{K}) jusqu'à ce qu'une température de désorption maximale (T_{N}) soit atteinte et dans le troisième (t3) intervalle de temps n'est pas exploitée,
le premier intervalle de temps (t1) dure jusqu'à ce qu'une température de commutation (T_{U}) inférieure à une température de désorption maximale (T_{M}) soit atteinte.

2. Procédé selon la revendication 1,
**caractérisé en ce que**
la température de commutation (T_{U}) est située entre 5°C et 10°C en dessous de la température de désorption maximale (T_{M}).

3. Procédé selon la revendication 1 ou 2,
**caractérisé en ce que**
le troisième intervalle de temps (t3) dure une durée déterminée quand la source de chaleur (3) est mise hors service.

4. Procédé selon une des revendications 1 à 3,
**caractérisé en ce que**
le troisième intervalle de temps (t3) dure quand la source de chaleur (3) est mise hors service jusqu'à ce qu'un gradient de température prédéfini soit atteint au choix sur l'échangeur de chaleur (1,2) du côté de la source de chaleur ou du côté du sorbeur.

5. Dispositif de sorption sous vide pour mettre en oeuvre le procédé selon la revendication 1, comprenant un sorbeur (4) absorbant ou désorbant périodiquement un moyen refroidissant, constitué d'un moyen de sorption et d'un premier échangeur de chaleur (1), une source de chaleur (3) comportant un deuxième échangeur de chaleur (2) et un circuit de caloporteur (5) rempli par un milieu caloporteur, reliant l'un à l'autre les échangeurs de chaleur (1, 2),
**caractérisé en ce que**
la source de chaleur (3) est réalisée comme un brûleur à fioul.

6. Dispositif de sorption sous vide selon la revendication 5,
**caractérisé en ce que**
le brûleur à fioul est réalisé comme un brûleur à fioul à deux étages.

7. Dispositif de sorption sous vide selon la revendication 5 ou 6,
**caractérisé en ce que**
comme moyen de sorption, on emploie de la zéolithe.
